(19) Europäisches Patentamt
European Patent Office
Office européen des brevets

(11) **EP 3 247 597 B1**

(12) **EUROPÄISCHE PATENTSCHRIFT**

(45) Veröffentlichungstag und Bekanntmachung des Hinweises auf die Patenterteilung:
**03.10.2018 Patentblatt 2018/40**

(21) Anmeldenummer: **15820168.1**

(22) Anmeldetag: **28.12.2015**

(51) Int Cl.:
***B60T 7/10*** *(2006.01)*

(86) Internationale Anmeldenummer:
**PCT/EP2015/081271**

(87) Internationale Veröffentlichungsnummer:
**WO 2016/116249 (28.07.2016 Gazette 2016/30)**

(54) **VERFAHREN UND VORRICHTUNG ZUM BETREIBEN EINER PARKBREMSE**

METHOD FOR ACTUATING A PARKING BRAKE AND PARKING BRAKE

MÉTHODE DE ACTUATION D'UN FREIN DE STATIONNEMENT ET FREIN DE STATIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2015 DE 102015201002**

(43) Veröffentlichungstag der Anmeldung:
**29.11.2017 Patentblatt 2017/48**

(73) Patentinhaber: **Robert Bosch GmbH
70442 Stuttgart (DE)**

(72) Erfinder: **SUSSEK, Ullrich
71720 Oberstenfeld (DE)**

(56) Entgegenhaltungen:
**DE-A1-102004 055 876    US-A1- 2011 308 898**

**Beschreibung**

Die Erfindung betrifft ein Verfahren zum Betreiben einer Parkbremse, die einen Aktuator mit einem verlagerbaren Stellelement und einen Elektromotor aufweist, wobei der Elektromotor mit dem Stellelement zu dessen Verlagerung wirkverbunden ist, wobei der Elektromotor angesteuert wird, um das Stellelement um einen vorgebebenen Bewegungsweg zu verlagern, und wobei zum Ansteuern des Elektromotors ein Ist-Bewegungsweg des Stellelements überwacht wird.
Ferner betrifft die Erfindung eine Vorrichtung zum Betreiben der oben genannten Parkbremse.

Stand der Technik

Verfahren und Vorrichtungen der eingangs genannten Art sind aus dem Stand der Technik bekannt. Kraftfahrzeuge werden mittlerweile häufig mit Parkbremsen ausgestattet, die besonders kompakt in das Kraftfahrzeug, insbesondere in eine Radbremse des Kraftfahrzeugs integriert werden können. Dazu ist es beispielsweise bekannt, an dem Bremssattel einer Radbremse einen Aktuator mit einem Elektromotor und einem Stellelement anzuordnen, die die Radbremse unabhängig von deren eigentlichen Betätigung, insbesondere unabhängig von einer hydraulischen Betätigung der Radbremse, betätigen zu können. Dazu ist es beispielsweise bekannt, an dem Bremssattel einen Elektromotor anzuordnen, der über ein Getriebe auf einen Bremsbelag oder einen Bremskolben als das Stellelement wirkt. Durch Betätigen des Elektromotors wird der Bremskolben in Richtung einer mit einem Rad des Kraftfahrzeugs drehfest verbundenen Bremsscheibe verlagert, wobei durch den Elektromotor ein Stellmoment erzeugt wird, welches über das Getriebe auf das Stellelement ausgeübt wird, um eine gewünschte Klemmkraft beziehungsweise Bremskraft an der Radbremse zu erreichen. Dabei ist es bekannt, die Klemmkraft durch einen vorgegebenen Bewegungsweg des Stellelements zu erreichen. Dabei ist das Erreichen des vorgegebenen Bewegungswegs sowohl beim Festziehen als auch beim Lösen der Parkbremse von Bedeutung. In Kenntnis des tatsächlichen Bewegungswegs kann beispielsweise ein Löseweg beziehungsweise Öffnungsweg der Parkbremse mit hoher Genauigkeit eingestellt werden, sodass sich die Bremsbacken sicher von der Bremsscheibe lösen. Üblicherweise wird zum Bestimmen des Bewegungswegs ein Drehzahlsensor vorgesehen, der die Drehzahl des Elektromotors überwacht, oder es wird der Elektromotor zeitgesteuert betrieben oder der Bewegungsweg des Stellelements direkt durch einen Bewegungswegsensor erfasst.
Die Druckschrift DE 10 2004 055 876 A1 beschreibt ein Verfahren zum Verriegeln einer Parkbremse, bei welchem eine Stellschraube von einem Elektromotor angetrieben wird. In Abhängigkeit einer Stromaufnahme des Elektromotors werden eine Drehzahl einer durch den Elektromotor angetriebenen Welle und daraus der von dem Stellelement zurückgelegte Weg ermittelt. Die Offenlegungsschrift US 2011/0308898 A1 offenbart eine Parkbremse, bei welcher mittels eines Elektromotors ein Stellelement verlagert wird. Ein Verschiebeweg des Stellelements wird in Abhängigkeit des elektrischen Stroms des Elektromotors bestimmt.

Offenbarung der Erfindung

Das erfindungsgemäße Verfahren mit den Merkmalen des Anspruchs 1 hat den Vorteil, dass auf einen Drehzahl- oder Wegsensor verzichtet werden kann, und dennoch ein Bewegungsweg des Stellelements unter allen Betriebsbedingungen sicher erreicht beziehungsweise eingehalten werden kann. Dabei wird auch erreicht, dass unabhängig von beispielsweise Reibwiderständen oder Verschleißerscheinungen des Aktuators der gewünschte Bewegungsweg eingestellt wird. Erfindungsgemäß ist hierzu vorgesehen, dass der Ist-Bewegungsweg des Stellelements in Abhängigkeit von einem Motorstrom und/oder einer Motorspannung des Elektromotors bei dessen Betätigung bestimmt wird. Es werden also der Motorstrom und die Motorspannung erfasst und in deren Abhängigkeit der Ist-Bewegungsweg des Stellelements ermittelt. Dadurch ist es möglich, auf einfache Art und Weise die Stellung beziehungsweise den Bewegungsweg des Stellelements ohne zusätzliche Sensoren zu ermitteln. Üblicherweise werden Motorstrom und Motorspannung eines Elektromotors bei dessen Ansteuerung ohnehin erfasst, sodass für die Durchführung des erfindungsgemäßen Verfahrens keine zusätzlichen Sensoren notwendig sind.
Weiterhin ist erfindungsgemäß vorgesehen, dass aus dem Motorstrom und der Motorspannung ein Drehzahlsignal des Elektromotors ermittelt wird, in dessen Abhängigkeit der Ist-Bewegungsweg bestimmt wird. In Kenntnis von Motorstrom und Motorspannung lässt sich die Drehzahl des Elektromotors berechnen. In Kenntnis der Übersetzung des Getriebes lässt sich damit dann auf einfache Art und Weise der Ist-Bewegungsweg des Stellelements bestimmen beziehungsweise ermitteln.
Ferner ist bevorzugt vorgesehen, dass das Drehzahlsignal integriert wird, um den Ist-Bewegungsweg zu bestimmen. Das Drehzahlsignal wird also zu einem Wegsignal integriert. Dabei ist insbesondere vorgesehen, dass das Drehzahlsignal über die Tastzyklen integriert wird, mit welchen der Motorstrom und die Motorspannung erfasst werden. Dabei entsprechen die Tastzyklen insbesondere der Betriebsfrequenz und der Ansteuerung des Elektromotors, der bevorzugt pulsweitenmoduliert angesteuert wird.
Gemäß einer bevorzugten Weiterbildung der Erfindung ist vorgesehen, dass die Integration in Abhängigkeit von einer Motorkonstante und/oder einem Motorwiderstand des Elektromotors erfolgt. Das Betriebsverhalten jedes Elektromotors hängt von dessen Motorkonstante und seinem Motorwiderstand ab. In Kenntnis dieser Werte ist es möglich, aus der erfassten Motorspannung und dem erfassten Motorstrom ein sehr genaues Drehzahlsignal des Elektromotors zu ermitteln. In einer ersten Ausführungsform ist vorgesehen, dass eine berechnete Motorkonstante und ein berechneter Motorwiderstand dem Verfahren zugrunde gelegt werden. Dabei ergeben sich die berechnete Motorwiderstand und die berechnete Motorkonstante insbesondere aus den Konstruktionsdaten des Elektromotors. Gemäß einer weiteren Ausführungsform ist alternativ vorgesehen, dass die Motorkonstante und der Motorwiderstand bei Inbetriebnahme des Elektromotors einmal ermittelt und dann in einem nicht flüchtigen Speicher zur späteren Verwendung hinterlegt werden.

Besonders bevorzugt ist gemäß einer weiteren Ausführungsform vorgesehen, dass die Motorkonstante und der Motorwiderstand jedes Mal beim Einschalten des Elektromotors ermittelt werden. Das Ermitteln der Motorkonstante und des Motorwiderstands beim Einschalten des Elektromotors ist bereits in anderen, früheren Druckschriften beschrieben worden, sodass an dieser Stelle darauf nicht näher eingegangen werden soll. Wichtig ist, dass die genannten Parameter stets beim Einschalten des Elektromotors ermittelt werden, sodass bei jedem Löse- oder Festspannvorgang der Parkbremse die Parameter erneut ermittelt werden, sodass die Integration stets in Abhängigkeit von aktuellen Parameterwerten durchgeführt wird und somit eine sehr genaue Bestimmung des Ist-Bewegungswegs gewährleistet wird.

Ferner ist bevorzugt vorgesehen, dass das Drehzahlsignal zuerst integriert und dann mit der ermittelten Motorkonstante und dem ermittelten Motorwiderstand korrigiert wird. Dadurch wird gewährleistet, dass die Integration des Drehzahlsignals bereits mit Inbetriebnahme des Elektromotors, also schon vor Kenntnis der ermittelten Motorkonstante und des ermittelten Motorwiderstands, begonnen wird. Erst dann, wenn Motorkonstante und Motorwiderstand erfolgreich ermittelt werden konnten, werden diese zur Korrektur der Integration herbeigezogen. Die Berechnung beziehungsweise Bestimmung des Ist-Bewegungswegs kann beispielsweise auf Basis der zuletzt ermittelten Werte der Motorkonstante und des Motorwiderstands beginnen. Auch ist es möglich, die Berechnung zunächst auf Basis der in dem nichtflüchtigen Speicher ursprünglich hinterlegten Werte für Motorkonstante und Motorwiderstand zu starten. Sobald bei dem aktuellen Betätigungsvorgang die Motorkonstante und der Motorwiderstand ermittelt wurden, werden die ursprünglich gewählten Parameterwerte durch die aktuell ermittelten Parameterwerte ersetzt und das Verfahren fortgeführt.

Die erfindungsgemäße Vorrichtung mit den Merkmalen des Anspruchs 7 zeichnet sich durch ein speziell hergerichtetes Steuergerät aus, das dazu ausgebildet ist, bei bestimmungsgemäßem Gebrauch das erfindungsgemäße Verfahren durchzuführen. Es ergeben sich hierdurch die bereits zuvor genannten Vorteile. Weitere Vorteile und Merkmale ergeben sich aus dem zuvor Beschriebenen sowie aus den Ansprüchen.

Im Folgenden soll die Erfindung anhand der Zeichnung näher erläutert werden. Dazu zeigen

Figur 1   ein Ausführungsbeispiel einer Parkbremse in einer vereinfachten Schnittdarstellung und

Figur 2   ein vereinfachten Ersatzschaltbild eines Elektromotors der Parkbremse.

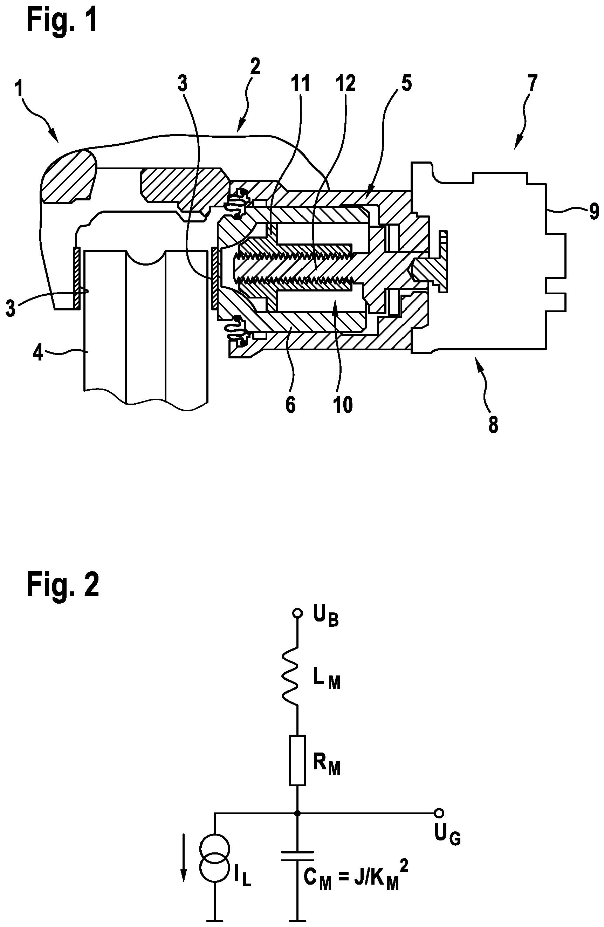

Figur 1 zeigt in einer vereinfachten Schnittdarstellung eine Radbremseinrichtung 1 eines Bremssystems eines hier nicht näher dargestellten Kraftfahrzeugs. Zweckmäßigerweise weist das Kraftfahrzeug wenigstens zwei Rädern zugeordnet jeweils eine entsprechende Radbremseinrichtung 1 auf. Die Radbremseinrichtung 1 ist als Scheibenbremse ausgebildet und weist dazu einen Bremssattel 2 auf, der Bremsbeläge 3 trägt, zwischen denen eine mit einem Rad des Kraftfahrzeugs drehfest verbundene Bremsscheibe 4 verklemmbar beziehungsweise verspannbar ist. Dazu ist dem Bremssattel 2 ein Aktuator 5 zugeordnet, der einen Bremskolben 6 aufweist, welcher hydraulisch betätigbar ist, um die Bremsscheibe 4 bei Bedarf zwischen den Bremsbelägen 3 fest zu spannen. Durch das Festspannen wird erreicht, dass eine reibschlüssige Verbindung zwischen Bremsscheibe 4 und den Bremsbelägen 3 erzeugt wird, die ein Bremsmoment auf das jeweilige Rad ausübt.

Die Radbremseinrichtung 1 ist außerdem mit einer integrierten Parkbremse 7 ausgestattet. Dazu weist die Radbremseinrichtung 1 einen Aktuator 8 auf, der von einem Elektromotor 9, einem Getriebe 10 und einem Stellelement 11 gebildet wird. Eine Abtriebswelle des Elektromotors 9 ist mit dem Getriebe 10 wirkverbunden. Dazu ist die Abtriebswelle drehfest mit einer Antriebsspindel 12 verbunden, die ein Außengewinde aufweist, das mit einem Innengewinde des entlang der Antriebsspindel 12 verfahrbaren Stellelements 11 zusammenwirkt. Durch Ansteuern des Elektromotors 9 wird die Antriebsspindel 12 in eine Rotationsbewegung versetzt und dadurch das Stellelement 11 axial entlang der Antriebsspindel 12 verlagert. Dabei ist das Stellelement 11 von einer Freigabestellung in eine Zuspannstellung verlagerbar, in welcher das Stellelement 11 den Bremskolben 6 gegen die Bremsscheibe 4 drängt und dadurch die Bremsscheibe 4 zwischen den Bremsbelägen 3 festspannt beziehungsweise zuspannt. Das Stellelement 11 ist dabei koaxial zu dem Bremskolben und innerhalb des Bremskolbens 6 angeordnet. Durch das Getriebe 10 ist die Parkbremse 7 insbesondere selbsthemmend ausgebildet, sodass, wenn der Elektromotor 9 betätigt wurde, um die Parkbremse zuzuspannen, diese nur durch erneutes Ansteuern des Elektromotors 9 wieder gelöst werden können, indem die Antriebswelle des Elektromotors 9 in die entgegengesetzte Richtung angetrieben und dadurch das Stellelement 11 aus der Zuspannstellung zurück in die Freigabestellung bewegt wird.

Zum Lösen der Parkbremse 7 wird der Elektromotor 9 zweckmäßigerweise derart angesteuert, dass das Stellelement 11 von der Zuspannstellung in die Freigabestellung derart verlagert wird, dass ein Lüftungsspiel zwischen den Bremsbelägen 3 und der Bremsscheibe 4 eingestellt wird. Unter einem Lüftungsspiel ist hierbei ein Abstand zwischen den Bremsbelägen 3 und der Bremsscheibe 4 zu verstehen, der gewährleistet, dass die Bremsscheibe 4 frei drehen kann und ein Verschleiß der Bremsbeläge 3 und der Bremsscheibe 4 vermieden wird. Um sicherzustellen, dass das korrekte Lüftungsspiel eingestellt wird, ist das im Folgenden beschriebene Verfahren vorgesehen, das von einem dem Bremssystem beziehungsweise der Parkbremse 7 zugeordneten Steuergerät durchgeführt wird. Durch das Verfahren wird der Ist-Bewegungsweg des Stellelements 11 ermittelt und gegebenenfalls mit einem Soll-Bewegungsweg verglichen, um die Stellung des Stellelements 11 und damit dessen Abstand zu der Bremsscheibe 4 im Betrieb erfassen zu können, ohne dass hierfür ein separater Bewegungswegsensor, wie beispielsweise ein Hall-Sensor oder ein Drehzahlsensor vorgesehen werden müssen.

Hierzu ist vorgesehen, dass der Ist-Bremsweg des Stellelements 11 in Abhängigkeit von einem integrierten Drehzahlsignal bestimmt wird, das sich aus einem gemessenen Motorstrom und einer gemessenen Motorspannung des Elektromotors 9 und aus Korrekturwerten ergibt. Während des Einschaltvorgangs des Elektromotors 9 werden der Motorstrom und die Motorspannung erfasst und ausgewertet. Insbesondere wird in Abhängigkeit der erfassten Strom- und Spannungswerte der Motorwiderstand $R_M$ und die Motorkonstante $K_M$ bestimmt. Mit diesen Motorparametern wird dann mit den Strom- und Spannungswerten ein Drehzahlsignal berechnet, das zu einem Wegsignal integriert wird. Da die Motorparameter Motorkonstante und Motorwiderstand erst im Laufe des Öffnungsvorgangs berechnet werden, wird die Integration mit Basisparametern gestartet. Diese Basisparameter können beispielsweise auf Basis der Konstruktionsdaten der Parkbremse 7 berechnet oder bei der Fertigung oder erst-Inbetriebnahme der Parkbremse 7 erfasst und gespeichert werden. Die Integration erfolgt dann derart, dass die Integration beginnt, und dann, sobald aktuelle Werte der oben genannten Motorparameter Motorwiderstand und Motorkonstante zur Verfügung stehen, die Integration durch diese korrigiert wird.

Figur 2 zeigt dazu ein Ersatzschaltbild des Elektromotors 9. Beim Anschalten des Elektromotors 9 entsteht ein Einschaltpeak, in Abhängigkeit dessen der Motorwiderstand $R_M$ und die Motorkonstante $K_M$ bestimmt werden. Die Massenträgheit J und die Induktivität $L_M$ des Ankers des Elektromotors 9 werden als bekannt vorausgesetzt. $I_L$ ist der Leerlaufstrom des Elektromotors 9 im lastfreien Zustand.

Zu Berechnung des Bewegungsweges des Stellelements 11 wird die Motordrehzahl n über die Taskzyklen $T_{cyc}$ integriert. Es gilt folgende Gleichung für die Spannungsbilanz:

$$U_B = L_M \cdot \frac{di}{dt} + R_M \cdot i + u_G$$

Die generatorische Spannung $u_G$ lässt sich mit $K_M \cdot \omega$ angeben, wobei $\omega$ die Kreisfrequenz ist. Für im Steuergerät messbare Stromwerte i und Spannungswerte u gilt somit für $\omega$:

$$\omega = \frac{u - L_M \cdot \dfrac{\Delta i}{T_{cyc}} - R_M \cdot i}{K_M} = \frac{1}{K_M} \cdot \left( u - L_M \cdot \frac{\Delta i}{T_{cyc}} \right) - \frac{R_M}{K_M} \cdot i$$

Die Bildung des Wegsignals erfolgt nun über eine einfache Integration der Teilwege $\Delta s$, wobei n die Drehzahl und ü das Übersetzungsverhältnis des Getriebes 10 ist:

$$\Delta s = n \cdot T_{cyc} \cdot \ddot{u} = \frac{T_{cyc} \cdot \ddot{u}}{2 \cdot \pi} \cdot \omega = \frac{T_{cyc} \cdot \ddot{u}}{2 \cdot \pi} \cdot \frac{1}{K_M} \cdot \left( u - L_M \cdot \frac{\Delta i}{T_{cyc}} \right) - \frac{T_{cyc} \cdot \ddot{u}}{2 \cdot \pi} \cdot \frac{R_M}{K_M} \cdot i$$

$$s = \sum \Delta s = \frac{T_{cyc} \cdot \ddot{u}}{2 \cdot \pi} \cdot \frac{1}{K_M} \cdot \sum \left( u - \frac{L_M}{T_{cyc}} \cdot \Delta i \right) - \frac{T_{cyc} \cdot \ddot{u}}{2 \cdot \pi} \cdot \frac{R_M}{K_M} \cdot \sum i$$

Somit lässt sich der Bewegungsweg über zwei getrennt zu integrierende Therme berechnen, die mit den

Faktoren $f_1(K_M)$ und $f_2(K_M,R_M)$ multipliziert werden:

$$s = f_1(K_M) \cdot \sum \left( u - \frac{L_M}{T_{cyc}} \cdot \Delta i \right) - f_2(K_M, R_M) \cdot \sum i$$

Die Faktoren $f_1$ und $f_2$ werden mit den aktuell erfassten Motorparametern Motorwiderstand $R_{M\_neu}$ und Motorkonstante $K_{M\_neu}$ korrigiert, wobei die als Basiswert beziehungsweise Default-Wert verwendeten Werte der Motorkonstante und des Motorwiderstands als $K_{M\_alt}$ beziehungsweise $R_{M\_alt}$ in die Rechnung eingehen:

$$f_{1neu} = f_{1alt} \cdot \frac{K_{M\_alt}}{K_{M\_neu}}$$

$$f_{2neu} = f_{2alt} \cdot \frac{K_{M\_alt} \cdot R_{M\_neu}}{K_{M\_neu} \cdot R_{M\_alt}}$$

Der Bewegungsweg s beim Bewegen des Stellelements 11 von der Zuspannstellung in die Freigabestellung, also letztendlich der Öffnungsweg der Parkbremse 7, kann somit während der gesamten Ansteuerung berechnet werden, wobei die Integration des Wegesignals bereits mit Beginn der Ansteuerung erfolgt und dann korrigiert wird, sobald die neuen beziehungsweise aktuellen Motorparameter Motorwiderstand und Motorkonstante zur Verfügung stehen.

Damit ist es möglich, den Ist-Bewegungsweg des Stellelements 11 auf einfache Art und Weise beim Ansteuern des Elektromotors 9 zu berechnen, sodass auf zusätzliche Sensoren zum Erfassen der Bewegung des Stellelements 11 verzichtet werden kann. In Kenntnis des Ist-Bewegungswegs wird die Ansteuerung des Elektromotors 9 zweckmäßigerweise geregelt, sodass der Ist-Bewegungsweg insbesondere einem Soll-Bewegungsweg, der durch das Steuergerät vorgegeben wird, entspricht.

## Patentansprüche

1. Verfahren zum Betreiben einer Parkbremse (7), die einen Aktuator (8) mit einem Stellelement (11) und mit einem Elektromotor (9) aufweist, wobei der Elektromotor (9) mit dem Stellelement (11) zu dessen Verlagerung wirkverbunden ist, wobei der Elektromotor (9) angesteuert wird, um das Stellelement (11) um einen vorgegebenen Bewegungsweg zu verlagern, und wobei zum Ansteuern des Elektromotors (9) ein Ist-Bewegungsweg des Stellelements (11) überwacht wird, wobei der Ist-Bewegungsweg des Stellelements (11) in Abhängigkeit von einem Motorstrom (i) und/oder einer Motorspannung (u) des Elektromotors (9) bestimmt wird, **dadurch gekennzeichnet, dass** aus dem Motorstrom (i) und der Motorspannung (u) ein Drehzahlsignal des Elektromotors (9) ermittelt wird, in dessen Abhängigkeit der Ist-Bewegungsweg bestimmt wird.

2. Verfahren nach Anspruch 1, **dadurch gekennzeichnet, dass** das Drehzahlsignal integriert wird, um den Ist-Bewegungsweg zu bestimmen.

3. Verfahren nach Anspruch 2, **dadurch gekennzeichnet, dass** die Integration in Abhängigkeit von einer Motorkonstante ($K_M$) und/oder einem Motorwiderstand ($R_M$) des Elektromotors (9) erfolgt.

4. Verfahren nach Anspruch 3, **dadurch gekennzeichnet, dass** die Motorkonstante ($K_M$) und der Motorwiderstand ($R_M$) beim Einschalten des Elektromotors (9) ermittelt werden.

5. Verfahren nach Anspruch 4, **dadurch gekennzeichnet, dass** das Drehzahlsignal zuerst integriert und danach mit der ermittelten Motorkonstante ($K_M$) und dem ermittelten Motorwiderstand ($R_M$) korrigiert wird.

6. Vorrichtung zum Betreiben einer Parkbremse (7), insbesondere eines Kraftfahrzeugs, die einen Aktuator (8) mit einem verlagerbaren Stellelement (11) und einem Elektromotor (9) aufweist, wobei der Elektromotor (9) mit dem Stellelement (11) zu dessen Verlagerung wirkverbunden ist, **gekennzeichnet durch** ein Steuergerät, das dazu ausgebildet ist, bei bestimmungsgemäßem Gebrauch das Verfahren nach einem der Ansprüche 1 bis 5 durchzuführen.

**Claims**

1. Method for operating a parking brake (7) that comprises an actuator (8) having an adjusting element (11) and having an electric motor (9), wherein the electric motor (9) is operatively connected to the adjusting element (11) so as to displace said adjusting element, wherein the electric motor (9) is controlled in order to displace the adjusting element (11) along a predetermined movement path, and wherein an actual movement path of the adjusting element (11) is monitored so as to control the electric motor (9), wherein the actual movement path of the adjusting element (11) is determined in dependence upon a motor current (i) and/or a motor voltage (u) of the electric motor (9), **characterized in that** a rotational speed signal of the electric motor (9) is determined from the motor current (i) and the motor voltage (u) and the actual movement path is determined in dependence upon said rotational speed signal.

2. Method according to Claim 1, **characterized in that** the rotational speed signal is integrated in order to determine the actual movement path.

3. Method according to Claim 2, **characterized in that** the integration occurs in dependence upon a motor constant ($K_M$) and/or a motor resistance ($R_M$) of the electric motor (9).

4. Method according to Claim 3, **characterized in that** the motor constant ($K_M$) and the motor resistance ($R_M$) are determined when switching on the electric motor (9) .

5. Method according to Claim 4, **characterized in that** the rotational speed signal is initially integrated and afterwards is corrected using the determined motor constant ($K_M$) and the determined motor resistance ($R_M$).

6. Device for operating a parking brake (7), in particular of a motor vehicle, said device comprising an actuator (8) having an adjusting element (11) that can be displaced and an electric motor (9), wherein the electric motor (9) is operatively connected to the adjusting element (11) so as to displace said adjusting element, **characterized by means of** a control device that is embodied for the purpose of implementing the method according to any one of the Claims 1 to 5 when used in the proper manner.

**Revendications**

1. Procédé pour actionner un frein de stationnement (7), qui présente un actionneur (8) avec un élément de réglage (11) et avec un moteur électrique (9), dans lequel le moteur électrique (9) est en liaison active avec l'élément de réglage (11) pour le déplacement de celui-ci, dans lequel on commande le moteur électrique (9) pour déplacer l'élément de réglage (11) d'une course prédéterminée, et dans lequel pour commander le moteur électrique (9) on surveille une course réelle de l'élément de réglage (11), dans lequel on détermine la course réelle de l'élément de réglage (11) en fonction d'un courant de moteur (i) et/ou d'une tension de moteur (u) du moteur électrique (9), **caractérisé en ce que** l'on détermine à partir du courant de moteur (i) et de la tension de moteur (u) un signal de nombre de tours du moteur électrique (9), en fonction duquel on détermine la course réelle.

2. Procédé selon la revendication 1, **caractérisé en ce que** l'on intègre le signal de nombre de tours, afin de déterminer la course réelle.

3. Procédé selon la revendication 2, **caractérisé en ce que** l'on effectue l'intégration en fonction d'une constante de moteur ($K_M$) et/ou d'une résistance de moteur ($R_M$) du moteur électrique (9).

4. Procédé selon la revendication 3, **caractérisé en ce que** l'on détermine la constante de moteur ($K_M$) et la résistance de moteur ($R_M$) lors de l'enclenchement du moteur électrique (9).

5. Procédé selon la revendication 4, **caractérisé en ce que** l'on intègre d'abord le signal de nombre de tours et on le corrige ensuite avec la constante de moteur déterminée ($K_M$) et avec la résistance de moteur déterminée ($R_M$) .

6. Dispositif pour actionner un frein de stationnement (7), en particulier d'un véhicule automobile, qui présente un actionneur (8) avec un élément de réglage déplaçable (11) et avec un moteur électrique (9), dans lequel le moteur électrique (9) est en liaison active avec l'élément de réglage (11) pour le déplacement de celui-ci, **caractérisé par** un appareil de commande, qui est configuré pour exécuter en utilisation normale le procédé selon l'une quelconque des revendications 1 à 5.

# Fig. 1

# Fig. 2

$$U_B$$

$$L_M$$

$$R_M$$

$$U_G$$

$$I_L$$

$$C_M = J/K_M^2$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004055876 A1
- US 20110308898 A1